# EUROPÄISCHE PATENTSCHRIFT

(11) **EP 1 107 211 B1**
(45) Veröffentlichungstag und Bekanntmachung des Hinweises auf die Patenterteilung: **24.03.2004**
(21) Anmeldenummer: 00125382.2
(22) Anmeldetag: 01.12.2000
(51) Int. Cl.: G08G 1/16, B60K 31/00

(54) **Verfahren und Vorrichtung zum Verhindern eines Auffahrunfalles zwischen einem Fahrzeug und einem vorausfahrenden Fahrzeug**
Method and device to avoid collision between a vehicle and the preceding vehicle
Procédé et appareil pour éviter la collision d'un véhicule avec le véhicule précédent

(30) Priorität: 03.12.1999 DE 19958150
(43) Veröffentlichungstag der Anmeldung: 13.06.2001
(73) Patentinhaber: Volkswagen Aktiengesellschaft, 38436 Wolfsburg (DE)
(72) Erfinder: Mai, Rudolf, 38442 Wolfsburg (DE); Holze, Raimond, Dipl.-Ing., 38446 Wolfsburg (DE)

(56) Entgegenhaltungen:
- EP-A- 0 637 525
- DE-A- 2 642 211
- DE-A- 19 704 841
- FR-A- 2 770 016

## Beschreibung

Die Erfindung betrifft ein Verfahren zum Verhindern eines Auffahrunfalls zwischen einem Fahrzeug und einem vorausfahrenden Fahrzeug, insbesondere beim Einbiegen oder Auffahren auf Schnellstraßen, bei dem der Abstand des Fahrzeugs zum vorausfahrenden Fahrzeug gemessen wird und bei dem ein Warnhinweis an den Fahrer des Fahrzeugs ausgegeben wird, wenn der gemessene Abstand einen vorgegebenen Abstandsschwellenwert erreicht oder unterschreitet.

Die Erfindung betrifft weiterhin ein ähnliches Verfahren bei dem anstelle der Ausgabe des Warnhinweises die Beschleunigung des Fahrzeugs gestoppt wird.

Darüber hinaus betrifft die Erfindung eine Vorrichtung mit einem Beschleunigungssensor, einem Abstandssensor und einer Stelleinrichtung zum Durchführen des genannten Verfahrens.

Aus der US 5,165,497 ist eine Vorrichtung zur automatischen Regelung des Sicherheitsabstandes eines Fahrzeuges zu einem vorausfahrenden Fahrzeug bekannt. Die Vorrichtung umfaßt einen Mikrocomputer, der im Bereich von 0 bis 120 km/h automatisch die Geschwindigkeit des Fahrzeugs regelt, um einen Sicherheitsabstand beizubehalten und um somit einen Auffahrunfall zu vermeiden. Wenn das vorausfahrende Fahrzeug anhält, wird in dem mit der Vorrichtung ausgestatteten Fahrzeug ein Bremsmotor und ein Beschleunigungs-/Verzögerungsmotor angesteuert, um das Fahrzeug ebenfalls anzuhalten. Wenn das vorausfahrende Fahrzeug anfährt, wird der Beschleunigungs-/Verzögerungsmotor wiederum angesteuert, so daß das Fahrzeug ebenfalls anfährt. Auf diese Weise wird sichergestellt, daß das Fahrzeug dem vorausfahrenden Fahrzeug stets mit dem vorgegebenen Sicherheitsabstand folgt und daß es eine Sicherheitsgeschwindigkeit gemäß einem voreingestellten Höchstgeschwindigkeitswert beibehält.

Die Druckschrift GB 2 298 540 A betrifft eine Fahrzeugabstands-Warnvorrichtung, welche ein visuelles oder ein akustisches Warnsignal ausgibt, wenn der Abstand zwischen einem Fahrzeug und einem anderen Fahrzeug kleiner als ein vorgegebener Abstand ist. Eine Deaktivierung der Warnvorrichtung wird vorgeschlagen für den Fall, daß sich das Fahrzeug mit einer Geschwindigkeit bewegt, welche unterhalb einer vorgegebenen Geschwindigkeit liegt, oder wenn der Motor des Fahrzeugs mit einer Drehzahl dreht, welche geringer als eine vorgegebene Drehzahl ist.

Aus der EP 0 637 525 A2 ist ein Verfahren zum Vermeiden von Kollisionen von Kraftfahrzeugen bekannt, bei dem der Abstand eines Kraftfahrzeugs zu einem voraus befindlichen Hindernis mittels eines Abstandsmeßgeräts bestimmt und bei einem kritischen Abstand eine Warnmaßnahme ausgelöst wird. Dabei wird der kritische Abstand verkürzt, wenn die Eigengeschwindigkeit des Kraftfahrzeugs verringert wird.

Keine der zuvor zitierten Druckschriften aus dem Stand der Technik behandelt die spezielle Problematik der Gefahr eines Auffahrunfalls in Anfahrsituationen, wie sie zum Beispiel beim Einbiegen eines Fahrzeugs in den fließenden Verkehr einer vorfahrtsberechtigten Straße auftreten. Derartige Anfahrsituationen treten insbesondere beim Auffahren auf eine Autobahn auf, wo das Fahrzeug auf einem Beschleunigungsstreifen stark beschleunigen muß, um sich in den fließenden Verkehr auf der Autobahn einzuordnen.

Die beschriebenen Anfahrsituationen sind dadurch charakterisiert, daß das Fahrzeug stark beschleunigt und der Fahrer des Fahrzeugs nicht nur auf ein vorausfahrendes Fahrzeug, sondern auch auf den fließenden vorfahrtsberechtigten Verkehr auf der Schnellstraße neben sich achten muß. Derartige Situationen stellen hohe Anforderungen an die Konzentration des Fahrers und belasten ihn aufgrund der Mehrzahl der zu beobachtenden Vorgänge im hohen Maße. Die Gefahr, daß der Fahrer in einer derartigen Situation eine Gefahrensituation, wie sie zum Beispiel das plötzliche Abbremsen des vorausfahrenden Fahrzeugs darstellt, zu spät erkennt, ist dann sehr groß.

Es ist deshalb die Aufgabe der Erfindung, ein Verfahren und eine Vorrichtung der eingangs genannten Art in der Weise weiterzubilden, daß ein Auffahrunfall, insbesondere in einer Anfahrsituation, verhindert wird.

Diese Aufgabe wird für das erste eingangs genannte Verfahren in der Weise gelöst, daß der Abstand und die Beschleunigung des Fahrzeugs gemessen werden und daß der H Warnhinweis ausgegeben wird, wenn der gemessene Abstand s einen vorgegebenen Abstandsschwellenwert sₖ erreicht oder unterschreitet und wenn die Beschleunigung des Fahrzeugs zumindest unmittelbar vor dem Feststellen des Erreichens oder Unterschreitens des vorgegebenen Abstandsschwellenwertes, größer als ein vorgegebener Beschleunigungsschwellenwert war. Der Beschleunigungsschwellenwert aₖ ist dabei ein positiver Anteil der maximalen Beschleunigung.

Die Ausgabe des Warnhinweises an den Fahrer eines Fahrzeugs erfolgt erfindungsgemäß nur dann, wenn unmittelbar vor der Ausgabe des Warnhinweises zwei Bedingungen unabhängig voneinander erfüllt sind. Zum einen muß der Abstand des Fahrzeugs zu dem vorausfahrenden Fahrzeug einen vorgegebenen Abstandsschwellenwert erreicht oder unterschritten haben und zum anderen muß die Beschleunigung des Fahrzeugs einen vorgegebenen Beschleunigungsschwellenwert überschreiten.

Besonders starke Beschleunigungen eines Fahrzeugs treten üblicherweise in den oben beschriebenen Anfahrsituationen auf. Unterschreitet der Abstand des Fahrzeugs zum vorausfahrenden Fahrzeug in einer derartigen Anfahrsituation einen vorgegebenen Abstandsschwellenwert, so liegt in dieser Situation ein sehr großes Gefahrenpotential für einen Auffahrunfall. Dieses Gefahrenpotential wird noch dadurch verstärkt, daß der Fahrer in dieser Situation in der Regel nicht nur auf das vorausfahrende Fahrzeug, sondern auch auf den seitlich zum Fahrzeug fließenden Verkehr achten muß, wenn der Fahrer sein Fahrzeug dahinein einordnen will. Es ist daher von Vorteil, wenn gemäß dem ersten erfindungsgemäßen Verfahren in dieser Situation ein Warnhinweis an den Fahrer abgegeben wird, damit der Fahrer in geeigneter Weise auf die Bewegung seines Fahrzeugs einwirken kann, um einen Auffahrunfall zu verhindern.

Gemäß einem ersten Ausführungsbeispiel ist es vorteilhaft, wenn der Warnhinweis an den Fahrer optisch und/oder akustisch ausgegeben wird. Ein akustischer Warnhinweis ist insbesondere dann von Vorteil, wenn damit gerechnet werden muß, daß der Fahrer durch eine Vielzahl optischer Eindrücke abgelenkt ist.

Es ist von Vorteil, wenn der akustische Warnhinweis zumindest teilweise als Sprache ausgegeben wird, weil dann mit dem Warnhinweis sofort eine Handlungsempfehlung an den Fahrer ausgegeben werden kann.

Es ist weiterhin von Vorteil, wenn bei Erreichen des vorgegebenen Abstandsschwellenwertes ein anderer Warnhinweis an den Fahrer ausgegeben wird, als bei Unterschreiten des Abstandsschwellenwertes. Beide Kriterien repräsentieren ein unterschiedliches Gefahrenpotential und es ist deshalb vorteilhaft, wenn der Wamhinweis an den Fahrer in Abhängigkeit des Vorliegens eines der Kriterien unterschiedlich deutlich oder intensiv erfolgt.

Wenn die Ausgabe des Wamhinweises nur dann erfolgt, wenn der Beschleunigungsschwellenwert oberhalb von 70% der maximalen Beschleunigung des Fahrzeugs liegt, hat dies den Vorteil, daß die Ausgabe des Wamhinweises tatsächlich nur in extremen Situationen erfolgt und der Fahrer nicht unnötiger Weise durch den Warnhinweis erschreckt wird.

Darüber hinaus ist es empfehlenswert, den Abstandsschwellenwert variabel in Abhängigkeit von der Geschwindigkeit festzulegen, weil der Bremsweg des Fahrzeugs mit wachsender Geschwindigkeit exponentiell ansteigt.

Die oben genannte Aufgabe der Erfindung wird weiterhin dadurch gelöst, daß gemäß dem zweiten eingangs genannten Verfahren der Abstand und die Beschleunigung des Fahrzeuges gemessen werden und das Stoppen der Beschleunigung des Fahrzeugs erfolgt, wenn der gemessene Abstand einen vorgegebenen Abstandsschwellwert erreicht oder unterschritten hat und wenn die Beschleunigung des Fahrzeugs zumindest unmittelbar vor dem Feststellen des Erreichens oder Unterschreitens des vorgegebenen Abstandsschwellenwertes, größer als ein vorgegebener Beschleunigungsschwellenwert war. Dabei ist der Beschleunigungsschwellenwert ein positiver Anteil der maximalen Beschleunigung.

Erfindungsgemäß wird die Beschleunigung des Fahrzeugs nur dann gestoppt, wenn unmittelbar zuvor zwei Bedingungen erfüllt sind. Zum einen muß der Abstand des Fahrzeugs zu dem vorausfahrenden Fahrzeug kleiner als ein vorgegebener Abstandsschwellenwert sein und zum anderen muß die Beschleunigung des Fahrzeugs größer als ein vorgegebener Beschleunigungsschwellenwert gewesen sein.

Stoppen der Beschleunigung bezeichnet den Vorgang, daß die Beschleunigung des Fahrzeugs von einem positiven Wert entweder auf Null oder auf einen negativen Wert gesetzt wird. In jedem Fall bedeutet das Stoppen der Beschleunigung einen vorteilhaften Eingriff in das aktuelle Fahrverhalten des Fahrzeugs in der Weise, daß ein Auffahren des Fahrzeugs auf das vorausfahrende Fahrzeug wenn möglich noch verhindert wird.

Gemäß einer vorteilhaften Ausgestaltung weist bei dem zweiten Verfahren der Schritt des Stoppens der Beschleunigung einen Eingriff in das Motormanagement des Fahrzeugs auf, bei dem das Motormoment konstant gehalten wird, wenn der Abstand den vorgegebenen Abstandsschwellenwert erreicht hat. Wenn der Abstand zwischen dem Fahrzeug und dem vorausfahrenden Fahrzeug den Abstandsschwellenwert gerade erst erreicht, aber noch nicht unterschritten hat, ist ein Konstanthalten des Motormomentes eine angemessene und ausreichende Maßnahme, um einen Auffahrunfall zu verhindern; stärker wirkende Eingriffe in das Fahrverhalten des Fahrzeugs und insbesondere in das Motormanagement sind bei dieser Situation nicht erforderlich.

Im Unterschied dazu ist es vorteilhaft, daß der Schritt des Stoppens der Beschleunigung eine Verzögerung des Fahrzeugs durch Betätigen der Bremse und/oder einen Eingriff in das Motormanagement, bei dem das Motormoment zu Null gesetzt wird, umfaßt, wenn der Abstand zwischen dem Fahrzeug und dem vorausfahrenden Fahrzeug den vorgegebenen Abstandsschwellenwert unterschritten hat. Ein Unterschreiten des Abstandsschwellenwertes bezeichnet eine wesentlich kritischere Situation im Hinblick auf einen möglichen Auffahrunfall als ein Erreichen des Abstandsschwellenwertes, wie dies im vorherigen Absatz diskutiert wurde. Im Hinblick auf das erhöhte Unfallrisiko in der Situation des unterschrittenen Abstandsschwellenwertes ist ein verstärkter Eingriff in das Fahrverhalten des Fahrzeugs erforderlich und deshalb ist dann eine starke Abbremsung und/oder ein zu Null setzen des Motormomentes gerechtfertigt.

In Anbetracht des erhöhten Unfallrisikos bei Unterschreiten des Abstandsschwellenwertes ist es vorteilhaft, wenn die Verzögerung des Fahrzeugs dann mit mindestens 80% der maximal möglichen Verzögerung durchgeführt wird.

Weiterhin ist es von Vorteil, wenn der Abstandsschwellenwert variabel in Abhängigkeit von der Geschwindigkeit des Fahrzeugs festgelegt wird. Wie bereits für das erste erfindungsgemäße Verfahren ausgeführt, ist dieser Vorteil insbesondere mit der physikalischen Gesetzmäßigkeit zu begründen, daß der Bremsweg des Fahrzeugs exponentiell mit seiner Geschwindigkeit zunimmt.

Die oben formulierte Aufgabe der Erfindung wird weiterhin durch eine Vorrichtung zum Durchführen von mindestens einem der vorgenannten Verfahren gelöst, wobei die Vorrichtung einen Beschleunigungssensor zum Messen der Beschleunigung des Fahrzeugs und eine erste Vergleichseinrichtung zum Vergleichen der gemessenen Beschleunigung mit einem vorgegebenen Beschleunigungsschwellenwert, einen Abstandssensor zum Messen des Abstandes zwischen dem Fahrzeug und dem vorausfahrenden Fahrzeug und einer zweiten Vergleichseinrichtung zum Vergleichen des gemessenen Abstands mit dem vorgegebenen Abstandsschwellenwert sowie eine Stelleinrichtung zum Ausgeben des Warnhinweises an den Fahrer oder zum Einleiten des Stoppens der Beschleunigung nach Maßgabe der Ergebnisse der von der ersten und zweiten Vergleichseinrichtung durchgeführten Vergleiche umfaßt.

Gemäß einer vorteilhaften Ausgestaltung der Vorrichtung ist ein Antiblockiersystem vorgesehen, welches insbesondere beim Stoppen der Beschleunigung ein Blockieren der Räder des Fahrzeugs verhindert. Das Antiblockiersystem gewährleistet die Lenkfähigkeit des Fahrzeugs auch bei einer durchgeführten maximalen Verzögerung des Fahrzeugs.

Die oben erläuterten Vorteile des ersten und zweiten erfindungsgemäßen Verfahrens gelten analog für die beanspruchte Vorrichtung, sofern sich diese Verfahrensvorteile auf die Vorrichtung übertragen lassen.

Es folgt eine detaillierte Beschreibung eines ersten und zweiten Ausführungsbeispieles der Erfindung unter Bezugnahme auf die folgenden Figuren. In der Zeichnung zeigen
- Fig. 1: den Ablauf des erfindungsgemäßen Verfahrens gemäß einer ersten Ausführungsform;
- Fig. 2: das Fahrzeug und das vorausfahrende Fahrzeug bei Durchführung des Verfahrens gemäß der ersten Ausführungsform;
- Fig. 3: das erfindungsgemäße Verfahren gemäß einer zweiten Ausführungsform; und
- Fig. 4: das Fahrzeug und das vorausfahrende Fahrzeug bei der Durchführung des Verfahrens gemäß der zweiten Ausführungsform der Erfindung.

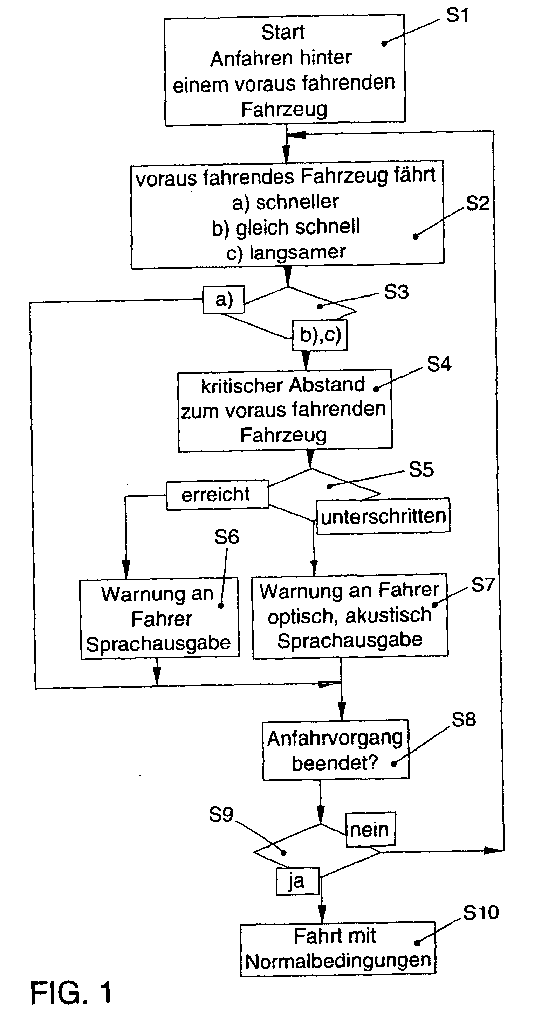

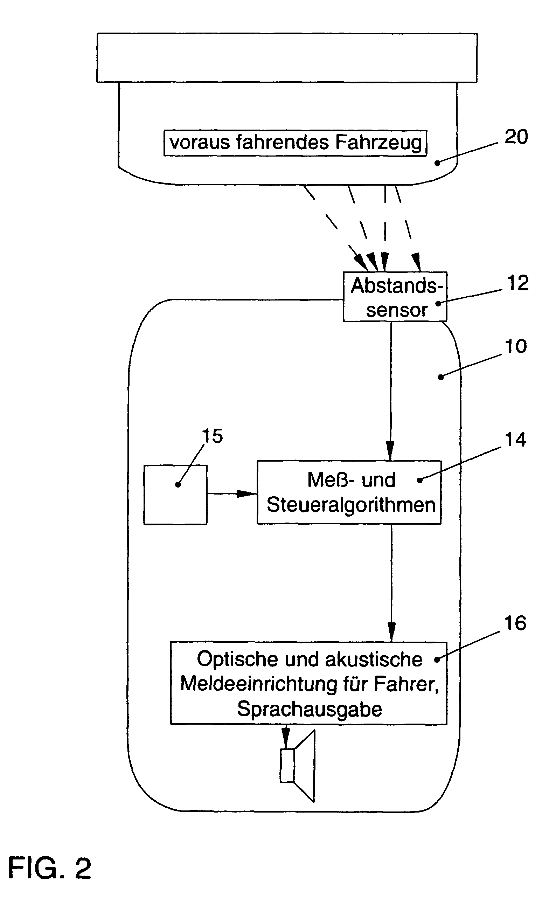

Es folgt zunächst eine Beschreibung des ersten Ausführungsbeispiels der Erfindung unter Bezugnahme auf die Fig. 1 und 2.

Das in Fig. 1 beschriebene Verfahren dient zum Verhindern eines Auffahrunfalls zwischen einem Fahrzeug 10 und einem vorausfahrenden Fahrzeug 20 gemäß Fig. 2, insbesondere beim Einbiegen oder Auffahren auf Schnellstraßen. In einem ersten Schritt gemäß Fig. 1 wird festgestellt, ob sich das Fahrzeug in einer Anfahrsituation befindet. Diese Feststellung wird getroffen, indem die Beschleunigung des Fahrzeugs 10 gemessen und mit einem vorgegebenen Beschleunigungsschwellenwert aₖ (k = kritisch) verglichen wird. Nur wenn die aktuelle Beschleunigung a des Fahrzeugs 10 in Fig. 2 größer als der vorgegebene Beschleunigungsschwellenwert aₖ ist, wird eine Anfahrsituation als Voraussetzung für das erfindungsgemäße Verfahren festgestellt. Ist andererseits die aktuelle Beschleunigung des Fahrzeugs 10 kleiner oder gleich dem vorgegebenen Beschleunigungsschwellenwert, so wird keine Anfahrsituation im Sinne der vorliegenden Erfindung festgestellt und das Verfahren nicht ausgeführt.

Unter der Voraussetzung das für das Fahrzeug 10 eine derartige Anfahrsituation festgestellt wird, ermittelt der Abstandssensor 12 den Abstand des Fahrzeugs 10 zu dem vorausfahrenden Fahrzeug 20. Die zeitliche Veränderung der von dem Abstandssensor 12 gelieferten Abstandsinformation wird im Verfahrensschritt S2 in Fig. 1 ausgewertet und erlaubt eine Entscheidung, ob das vorausfahrenden Fahrzeug a) schneller, b) gleich schnell oder c) langsamer fährt als das Fahrzeug 10.

Für den Fall, daß festgestellt wird, daß das vorausfahrende Fahrzeug schneller fährt, wird die Wahrscheinlichkeit eines Unfallrisikos grundsätzlich gering eingestuft und es wird deshalb in Verfahrensschritt S3 zu dem Verfahrensschritt S8 gesprungen, in welchem lediglich der Anfahrvorgang weiterhin überwacht wird. Solange der Anfahrvorgang des Fahrzeugs 10 noch nicht beendet ist, wird der Abstand des Fahrzeugs 10 zu dem vorausfahrenden Fahrzeug 20 weiterhin durch einen Sprung zu Verfahrensschritt S2 beobachtet.

Sollte sich andererseits in S2 bzw. S3 zeigen, daß das vorausfahrende Fahrzeug 20 gemäß den alternativen b) und c) gleich schnell oder langsamer als das Fahrzeug 10 fährt, so wird in Verfahrensschritt S3 ein erhöhtes Risiko für einen Auffahrunfall angenommen und es wird in Schritt S4 weiterhin geprüft, ob der von dem Abstandssensor 12 ermittelte Abstand zwischen dem Fahrzeug 10 und dem vorausfahrenden Fahrzeug 20 kleiner oder gleich einem vorgegebenen Abstandsschwellenwert sₖ (k: kritisch) ist. Wird in Verfahrensschritt S5 festgestellt, daß der kritische Abstand sₖ zum vorausfahrenden Fahrzeug 20 erreicht, aber noch nicht unterschritten ist, so verzweigt das Verfahren zu Verfahrensschritt S6, gemäß welchem ein sprachlicher Warnhinweis an den Fahrer des Fahrzeugs 10 ausgegeben wird. Der Fahrer wird gemäß Verfahrensschritt S6 darauf hingewiesen, daß aufgrund der zuvor beschriebenen Beschleunigungs- und Abstandssituation ein erhöhtes Unfallrisiko besteht.

Wird in Verfahrensschritt S5 andererseits festgestellt, daß der kritische Abstand sₖ zum vorausfahrenden Fahrzeug 20 sogar bereits unterschritten ist, wird eine Warnung an den Fahrer ausgegeben, daß sich das Fahrzeug nunmehr in einer Situation mit hohem Unfallrisiko befindet. Die Ausgabe des Warnhinweises an den Fahrer erfolgt durch optische und/oder akustische Meldeeinrichtungen 16, welche Bestandteil des Fahrzeugs 10 sind und auch zur Sprachausgabe geeignet sind.

Nach der Ausgabe des Warnhinweises an den Fahrer wird in den Verfahrensschritten S8 und S9 erneut geprüft, ob sich das Fahrzeug 10 noch in dem oben beschriebenen Anfahrvorgang befindet. Ist dies der Fall, so verzweigt das Verfahren zurück zu dem oben beschriebenen Verfahrensschritt S2. Andernfalls, d. h. wenn die Beschleunigung des Fahrzeugs 10 kleiner oder gleich dem vorgegebenen Beschleunigungsschwellenwert aₖ ist, wird angenommen, daß ein erhöhtes Unfallrisiko für das Fahrzeug nicht mehr besteht; das Verfahren wird dann gemäß S10 abgebrochen. Mit dem Abschluß der Verfahrens wird die Kontrolle des Fahrzeugs wieder vollständig in die Hände des Fahrers gelegt oder zumindest teilweise an ein aus dem Stand der Technik bekanntes automatisches System zur Abstandsregelung zwischen zwei Fahrzeugen (ADR: automatische Distanz-Regelung) übergeben.

Die Auswertung der Fahrsituation des Fahrzeugs 10 in bezug auf das vorausfahrende Fahrzeug 20 gemäß der Verfahrensschritte S2, S3, S4, S5 und S8, S9 erfolgt durch Meß- und Steueralgorithmen, welche in der ersten und zweiten Vergleichseinrichtung 14 realisiert sind.

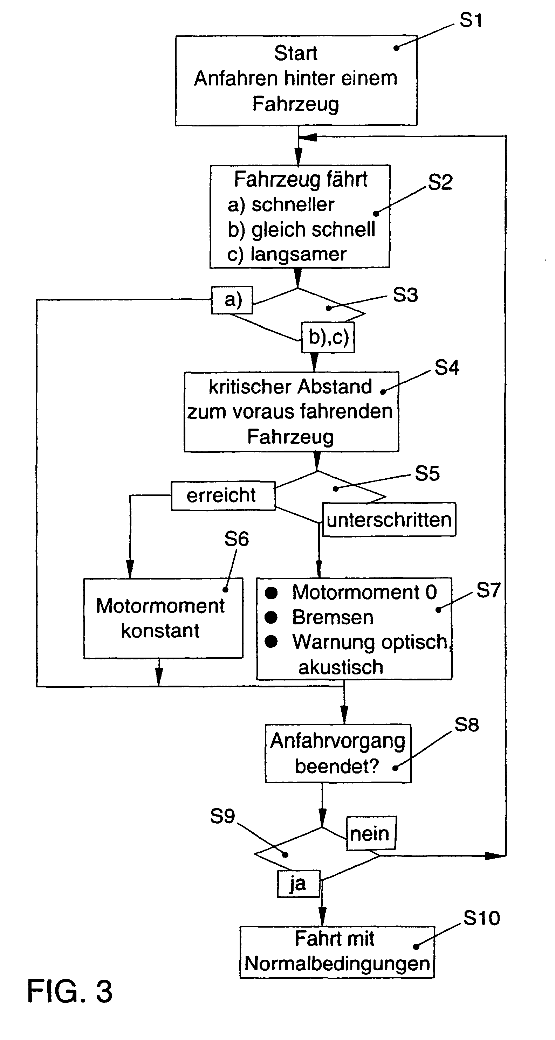

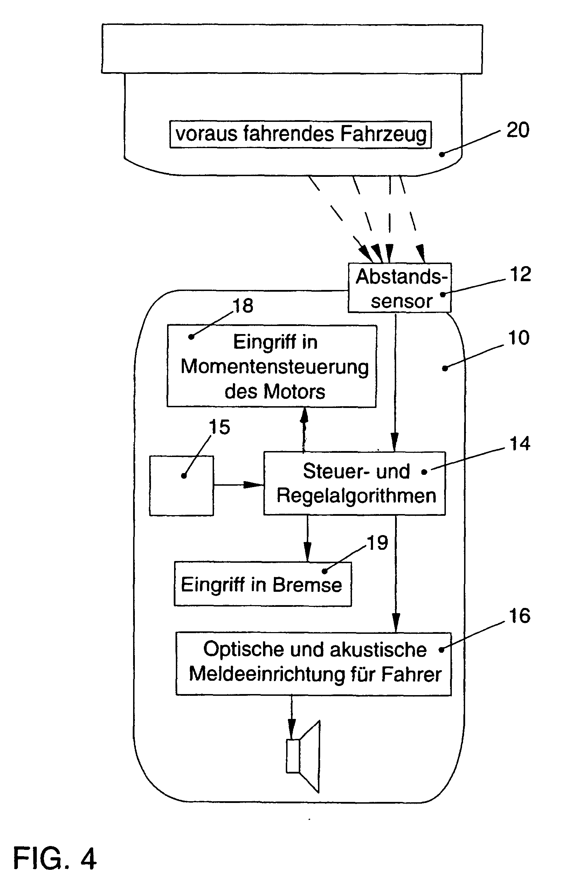

Es erfolgt nun die Beschreibung des zweiten Ausführungsbeispiels der Erfindung unter Bezugnahme auf die Figuren 3 und 4. Weil sowohl das Verfahren wie auch die Vorrichtung gemäß dem zweiten Ausführungsbeispiel in weiten Teilen jeweils mit dem Verfahren und der Vorrichtung gemäß dem ersten Ausführungsbeispiel übereinstimmen, werden im folgenden lediglich die Unterschiede erläutert.

Das Verfahren gemäß Fig. 3 unterscheidet sich von dem Verfahren gemäß Fig. 1 lediglich in den Schritten 6 und 7. Gemäß Fig. 4 unterscheidet sich die beanspruchte Vorrichtung in Fahrzeug 10 zum Durchführen des Verfahrens gemäß Fig. 3 lediglich durch die zusätzlichen Stellglieder 18 und 19.

Wird bei dem Verfahren gemäß Fig. 3 in den Verfahrensschritten S4 und S5 festgestellt, daß der Abstand s des Fahrzeugs 10 zum vorausfahrenden Fahrzeug 20 einen vorgegebenen kritischen Abstand sₖ erreicht, so wird gemäß Verfahrensschritt S6 mit Hilfe der Stelleinrichtung 18 in der Weise in die Momentensteuerung des Motors eingegriffen, daß das Motormoment konstant gehalten wird. Wird andererseits in den Verfahrensschritten S4 und S5 festgestellt, daß der vorgegebene kritische Abstandsschwellenwert sₖ bereits unterschritten ist, so wird mit Hilfe der Stelleinrichtungen 18, 19 gemäß Verfahrensschritt S7 das Fahrzeug 10 sehr stark verzögert, indem automatisch das Motormoment auf Null und/oder die Bremsen des Fahrzeugs stark betätigt werden. Die resultierende Verzögerung für das Fahrzeug 10 liegt dabei mindestens bei 80% der maximal möglichen Verzögerung.

Neben dem soeben beschriebenen automatischen Stoppen der Beschleunigung des Fahrzeugs 10 gemäß der Verfahrensschritte S6 und S7 in Fig. 3 ist weiterhin vorgesehen, daß in mindestens einem der Schritte S6 oder S7 eine optische und/oder akustische Warnung an den Fahrer des Fahrzeugs 10 ausgegeben wird.

## Patentansprüche

1. Verfahren zum Verhindern eines Auffahrunfalls zwischen einem Fahrzeug (10) und einem vorausfahrenden Fahrzeug (20) mit den Verfahrensschritten:
- Messen eines Abstands s zwischen den Fahrzeugen (10,20),
- Messen einer Beschleunigung a des Fahrzeugs (10),
- Ausgabe eines Warnhinweises an einen Fahrer des Fahrzeugs (10), wenn der gemessene Abstand s einen vorgegebenen Abstandsschwellenwert sₖ erreicht oder unterschreitet und wenn die Beschleunigung a des Fahrzeugs (10) zumindest unmittelbar vor dem Feststellen des Erreichens oder Unterschreitens des vorgegebenen Abstandsschwellenwertes sₖ größer als ein vorgegebener Beschleunigungsschwellenwert aₖ war,
**dadurch gekennzeichnet, dass** der Beschleunigungsschwellenwert aₖ ein positiver Anteil der maximalen Beschleunigung ist.

2. Verfahren nach Anspruch 1, **dadurch gekennzeichnet, dass** der Warnhinweis an den Fahrer optisch und/oder akustisch ausgegeben wird.

3. Verfahren nach Anspruch 2, **dadurch gekennzeichnet, dass** der akustische Warnhinweis zumindest teilweise als Sprache ausgegeben wird.

4. Verfahren nach einem der Ansprüche 1 bis 3, **dadurch gekennzeichnet, dass** bei Erreichen des vorgegebenen Abstandsschwellenwertes sₖ ein anderer Warnhinweis an den Fahrer ausgegeben wird, als bei Unterschreitens des Abstandsschwellenwertes sₖ.

5. Verfahren nach einem der vorhergehenden Ansprüche, **dadurch gekennzeichnet, dass** der Beschleunigungsschwellenwert aₖ oberhalb von 70% der maximalen Beschleunigung aₘₐₓ des Fahrzeuges (10) liegt.

6. Verfahren nach einem der vorhergehenden Ansprüche, **dadurch gekennzeichnet, dass** der Abstandsschwellenwert sₖ variabel in Abhängigkeit von der Geschwindigkeit v des Fahrzeugs (10) festgelegt wird.

7. Verfahren nach einem der vorangehenden Ansprüche, **dadurch gekennzeichnet, dass**
- die Beschleunigung a des Fahrzeugs (10) gestoppt wird, wenn der gemessene Abstand s einen vorgegebenen Abstandsschwellenwert sₖ erreicht oder unterschritten hat und wenn die Beschleunigung a des Fahrzeugs (10) zumindest unmittelbar vor dem Feststellen des Erreichens oder Unterschreitens des vorgegebenen Abstandsschwellenwertes sₖ größer als ein vorgegebener Beschleunigungsschwellenwert aₖ war.

8. Verfahren nach Anspruch 7, **dadurch gekennzeichnet, dass** der Schritt des Stoppens der Beschleunigung a einen Eingriff in das Motormanagement umfaßt, bei dem das Motormoment konstant gehalten wird, wenn der Abstand s den vorgegebenen Abstandsschwellenwert sₖ erreicht hat.

9. Verfahren nach Anspruch 7, **dadurch gekennzeichnet, dass** der Schritt des Stoppens der Beschleunigung a eine Verzögerung des Fahrzeugs (10) durch Betätigen der Bremse und/oder einen Eingriff in das Motormanagement, bei dem das Motormoment zu Null gesetzt wird, umfaßt, wenn der Abstand s den vorgegebenen Abstandsschwellenwert sₖ unterschritten hat.

10. Verfahren nach Anspruch 9, **dadurch gekennzeichnet, dass** die Verzögerung des Fahrzeugs (10) mit mindestens 80% der max. möglichen Verzögerung durchgeführt wird.

11. Vorrichtung zum Durchführen eines Verfahrens nach einem der vorangegangenen Ansprüche
- mit einem Beschleunigungssensor (15) zum Messen der Beschleunigung a eines Fahrzeugs (10) und einer ersten Vergleichseinrichtung (14) zum Vergleichen der gemessenen Beschleunigung a mit einem vorgegebenen Beschleunigungsschwellenwert aₖ,
- mit einem Abstandssensor (12) zum Messen eines Abstandes s zwischen dem Fahrzeug (10) und einem vorausfahrenden Fahrzeug (20) und einer zweiten Vergleichseinrichtung (14) zum Vergleichen des gemessenen Abstandes s mit dem vorgegebenen Abstandsschwellenwert sₖ und
- mit mindestens einer Stelleinrichtung (16, 18, 19) zum Ausgeben eines Warnhinweises an einen Fahrer des Fahrzeugs (10) oder zum Einleiten des Stoppens der Beschleunigung a nach Maßgabe der Ereignisse der von der ersten und zweiten Vergleichseinrichtung (14) durchgeführten Vergleiche, **dadurch gekennzeichnet, dass** der Beschleunigungsschwellwert aₖ ein positiver Anteil der maximalen Beschleunigung ist.

12. Vorrichtung nach Anspruch 11, **dadurch gekennzeichnet, dass** ein Antiblockiersystem vorgesehen ist, welches insbesondere beim Stoppen der Beschleunigung a ein Blockieren der Räder des Fahrzeugs (10) verhindert.

## Claims

1. Method for preventing a rear-end collision between a vehicle (10) and a vehicle (20) driving in front, having the following method steps:
- measuring a distance s between the vehicles (10, 20),
- measuring an acceleration a of the vehicle (10),
- issuing a warning to a driver of the vehicle (10) when the measured distance s reaches or falls short of a predetermined distance threshold value sₖ and if, at least directly before it is established that the predetermined distance threshold value sₖ has been reached or fallen short of, the acceleration a of the vehicle (10) was greater than a predetermined acceleration threshold value aₖ,
**characterized in that** the acceleration threshold value aₖ is a positive share of the maximum acceleration.

2. Method according to Claim 1, **characterized in that** the warning is issued visually and/or audibly to the driver.

3. Method according to Claim 2, **characterized in that** the audible warning is issued at least in part as speech.

4. Method according to one of Claims 1 to 3, **characterized in that**, when the predetermined distance threshold value sₖ is reached, a different warning is issued to the driver than when the distance threshold value sₖ is fallen short of.

5. Method according to one of the preceding claims, **characterized in that** the acceleration threshold value aₖ is above 70% of the maximum acceleration aₘₐₓ of the vehicle (10).

6. Method according to one of the preceding claims, **characterized in that** the distance threshold value sₖ is defined in a variable manner as a function of the speed v of the vehicle (10).

7. Method according to one of the preceding claims, **characterized in that**
- the acceleration a of the vehicle (10) is stopped when the measured distance s has reached or fallen short of a predetermined distance threshold value sₖ and if, at least directly before establishing that the predetermined distance threshold value sₖ has been reached or fallen short of, the acceleration a of the vehicle (10) was greater than a predetermined acceleration threshold value aₖ.

8. Method according to Claim 7, **characterized in that** the step of stopping the acceleration a comprises an intervention in the engine management, in which the engine torque is kept constant if the distance s has reached the predetermined distance threshold value sₖ.

9. Method according to Claim 7, **characterized in that** the step of stopping the acceleration a comprises a deceleration of the vehicle (10) by actuation of the brake, and/or an intervention in the engine management, in which the engine torque is set to zero if the distance s has fallen short of the predetermined distance threshold value sₖ.

10. Method according to Claim 9, **characterized in that** the deceleration of the vehicle (10) is carried out with at least 80% of the max. possible deceleration.

11. Device for carrying out a method according to one of the preceding claims
- having an acceleration sensor (15) for measuring the acceleration a of a vehicle (10) and a first comparison device (14) for comparing the measured acceleration a with a predetermined acceleration threshold value aₖ,
- having a distance sensor (12) for measuring a distance s between the vehicle (10) and a vehicle (20) driving in front, and a second comparison device (14) for comparing the measured distance s with the predetermined distance threshold value sₖ, and
- having at least one actuating device (16, 18, 19) for issuing a warning to a driver of the vehicle (10) or for initiating the stopping of the acceleration a in accordance with the events of the comparisons carried out by the first and second comparison device (14), **characterized in that** the acceleration threshold value aₖ is a positive share of the maximum acceleration.

12. Device according to Claim 11, **characterized in that** on antilock system is provided which prevents the wheels of the vehicle (10) from locking, in particular during stopping of the acceleration a.

## Revendications

1. Procédé pour empêcher une collision d'un véhicule (10) avec un véhicule (20) précédent comportant les étapes de procédé suivantes :
- mesure d'une distance s entre les véhicules (10, 20),
- mesure d'une accélération a du véhicule (10),
- envoi d'un signal d'avertissement à un conducteur du véhicule (10) lorsque la distance mesurée s atteint ou n'atteint pas une valeur seuil de distance sₖ prédéfinie ou lorsque l'accélération a du véhicule (10) est supérieure à une valeur seuil d'accélération aₖ prédéfinie au moins juste avant de constater que la valeur seuil de distance sₖ prédéfinie est atteinte ou n'est pas atteinte ;
**caractérisé en ce que** la valeur seuil d'accélération aₖ est une fraction positive de l'accélération maximale.

2. Procédé selon la revendication 1, **caractérisé en ce que** le signal d'avertissement est envoyé au conducteur sous une forme visuelle et/ou sonore.

3. Procédé selon la revendication 2, **caractérisé en ce que** le signal d'avertissement sonore est envoyé au moins partiellement sous une forme parlée.

4. Procédé selon l'une quelconque des revendications 1 à 3, **caractérisé en ce que**, si la valeur seuil de distance sₖ prédéfinie est atteinte, on envoie au conducteur un signal d'avertissement autre que celui envoyé si la valeur seuil de distance sₖ n'est pas atteinte.

5. Procédé selon l'une quelconque des revendications précédentes, **caractérisé en ce que** la valeur seuil d'accélération aₖ est supérieure à 70 % de l'accélération maximale aₘₐₓ du véhicule (10).

6. Procédé selon l'une quelconque des revendications précédentes, **caractérisé en ce que** la valeur seuil de distance sₖ est fixée de façon variable en fonction de la vitesse v du véhicule (10).

7. Procédé selon l'une quelconque des revendications précédentes, **caractérisé en ce que**
- l'accélération a du véhicule (10) est arrêtée lorsque la distance s mesurée a atteint ou n'a pas atteint une valeur seuil de distance sₖ prédéfinie ou lorsque l'accélération a du véhicule (10) est supérieure à une valeur seuil d'accélération aₖ prédéfinie au moins juste avant de constater que la valeur seuil de distance sₖ prédéfinie est atteinte ou n'est pas atteinte.

8. Procédé selon la revendication 7, **caractérisé en ce que** l'étape de l'arrêt de l'accélération a comprend une intervention sur la gestion du moteur, avec laquelle le couple moteur est maintenu constant lorsque la distance s a atteint la valeur seuil de distance sₖ prédéfinie.

9. Procédé selon la revendication 7, **caractérisé en ce que** l'étape de l'arrêt de l'accélération a comprend un ralentissement du véhicule (10) par l'actionnement du frein et/ou une intervention sur la gestion du moteur lors de laquelle le couple moteur est ramené à zéro, lorsque la distance s est passée au-dessous de la valeur seuil de distance sₖ prédéfinie.

10. Procédé selon la revendication 9, **caractérisé en ce que** le ralentissement du véhicule (10) est effectué avec au moins 80 % du ralentissement maximum possible.

11. Dispositif pour l'application d'un procédé selon l'une quelconque des revendications précédentes
- avec un capteur d'accélération (15) pour mesurer l'accélération a d'un véhicule (10) et un premier appareil de comparaison (14) pour comparer l'accélération a mesurée avec une valeur seuil d'accélération aₖ prédéfinie,
- avec un capteur de distance (12) pour mesurer une distance s entre le véhicule (10) et un véhicule (20) précédent et un second appareil de comparaison (14) pour comparer la distance s mesurée avec la valeur seuil de distance sₖ prédéfinie et
- avec au moins un appareil de commande (16, 18, 19) pour l'envoi d'un signal d'avertissement à un conducteur du véhicule (10) ou pour l'enclenchement de l'arrêt de l'accélération a en fonction des événements des comparaisons effectuées par le premier et le second appareil de comparaison (14), **caractérisé en ce que** la valeur seuil d'accélération aₖ est une fraction positive de l'accélération maximale.

12. Dispositif selon la revendication 11, **caractérisé en ce qu'**un système antiblocage est prévu, lequel empêche un blocage des roues du véhicule (10) en particulier lors de l'arrêt de l'accélération a.
